# EUROPEAN PATENT APPLICATION

(11) **EP 2 360 199 A1**
(43) Date of publication of application: **24.08.2011**
(21) Application number: 09827104.2
(22) Date of filing: 04.03.2009
(51) Int. Cl.: C08G 18/28, C08G 18/70, C08G 18/06, C08G 18/08, C08G 101/00

(54) **SOFT POLYURETHANE FOAM WITH LOW RESILIENCE AND THE PREPARATION METHOD THEREOF**

(30) Priority: 21.11.2008 CN 200810178640
(71) Applicant: U Clean Asia Limited, Central, Hong Kong (CN)
(72) Inventor: TU, Chung Hsien, Taiwan (CN)
(74) Representative: Gerbino, Angelo
(86) International application number: PCT/CN2009/000226
(87) International publication number: WO 2010/057355

(57) **Abstract**

A novel flexible, low resilience polyurethane foam based on a reaction product of isocyanate-reactive component with isocyanate component is disclosed. The flexible, low resilience polyurethane foam is prepared by reacting (a) an isocyanate component substantially free of aromatic isocyanates having isocyanate group attached directly to aromatic ring, (b) an isocyanate-reactive mixture, (c) catalyst, and (d) optionally, one or more substance selected from the group consisting of water, surfactant, cross-linker, and additive. The flexible, low resilience polyurethane foam produced according to the present method has an isocyanate index of from 75 to 105, a density ranging from 16 to 160 kilogram per cubic meter, and ball resilience of less than 15%.

## Description

### Technical Field

The present invention relates to polyurethane low resilience foam based on aliphatic isocyanate and/or alicyclic isocyanate and/or aromatic isocyante which contains no isocyanate group linked directly to aromatic ring, and its preparation. It also relates to reaction systems that are useful in said process, as well as the specific isocyanate-reactive component composition.

### Background

Flexible, low resilience polyurethane foam is characterized by slow, gradual recovery from compression, and often known as "low-resilience" foam, "visco-elastic" foam, "dead" foam, "high damping" foam, "shape memory" foam, or "slow recovery" foam. While most of its physical properties are similar to conventional polyurethane foams, the resilience of low resilience foam is much lower, generally less than about 15%.

Low resilience polyurethane foam has excellent shock absorbency and excellent vibration absorbency. It also has shape conforming, and energy attenuating characteristics, which make it an ideal material for cushions. The low resilience foam can be used in mattress, pillow, automotive seat cushion, and furniture cushion to reduce pressure points, in athletic padding or helmet as a shock absorber.

Soft low resilience polyurethane foams have similar touch feel of human breast, and can therefore be used in the assembly of brassiere pad, and shoulder pad.

Usually low resilience polyurethane foams are produced from polyol blend comprising rigid or semi-rigid triol having equivalent weight of less than 450, and flexible triol having equivalent weight of higher than 800. Most of flexible, low resilience polyurethane foam is produced at low isocyanate index (the molar ratio of isocyanate groups to isocyanate-reactive groups times 100). Most of the time, the index is less than 90. It results in highly cross-linked, lower molecular weight foam polymer, thus results in lower mechanical properties, especially tear strength and elongation. It can also result in narrow production latitude, and often cause foam shrinkage. Therefore, low resilience polyurethane foam is prepared by modifying the amount and type of polyol(s), polyisocyanate(s), surfactants, cross-linkers, catalysts, or other additives, to achieve foam with low resilience, practical physical properties, and reproducible production characteristics.

U.S.Pat. No. 7,388,037 discloses the use of soft polyol having hydroxyl value ( also called hydroxyl number, a measure of the amount of reactive hydroxyl groups available for reaction in polyol, its measurement method is described in ASTM D-4274-88 ) of from 5 to 15 mg KOH/g to provide flexibility of the foam, and to reduce cross-linking, hence improve processability.

Similar approach is disclosed in U.S. Pat. No. 6,617,369. With using polyol composition consisting of polyols with ethylene oxide content as high as 50 parts by weight based on 100 parts by weight of total polyol composition, foam with low resilience and improved processability can be produced.

U.S.Pat. No. 6,391,935 describes the use of polyester or polyoxyalkylene monool having a number average equivalent weight greater than about 1,000 and an OH number less than about 56 together with semi-rigid polyol to achieve foam with resilience less than 15%, while keeping the isocyanate index greater than 90.

The use of plasticizer is reported as in U.S. Pat. No. 6,790,871, where a halogenated paraffin, a (C₂/C₄) aliphatic polymer comprising a primary hydroxyl group, and mixtures therefore are used to produce low resilience foam with good flexibility under cold weather.

Flexible, low resilience polyurethane foam was firstly developed in mid 60's as a result of NASA's (National Aeronautics and Space Administration) AMES Research technology program. The purpose of the development aimed to allowing the low resilience foam to redistribute the G-Force suffered by astronauts during take-off and re-entry, and to providing commercial pilots a more comfortable seating during long flights (as described in "IN·TOUCH", Page 1, Volume 11, Number 1, June 2003, a regular publication of the Polyurethane Foam Association (PFA), P.O.Box 1459, Wayne, NJ). Unfortunately, owing to its low index nature and formulation needs to use large amount of volatile amine catalysts, the developed low resilience foam emitted significant amount of volatile organic chemicals (VOC) and prohibited it from been used in a close space. It has never been used in any spaceship or airplane since then.

With recent increasing concern with aromatic amine safety, e.g. toluenediamines (TDA) and diaminodiphenylmethane (MDA) as a reaction product from deterioration of polyurethane foams which are made from toluene diisocyanate (TDI) or methylene diphenyl diisocyanates (MDI), various synthetic approaches have been developed to reduce such emission. TDA and MDA are highly toxic compounds and possible carcinogens which attracts public attentions. U.S.Pat. No. 6,391,935 ( issued on May 21, 2002, invented by Bayer) further discloses "When toluene diisocyanate (TDI) is used to make viscoelastic foams at low index, the foams can contain undesirable high levels of toluenediamines, particularly after the normal curing process."

EUROPUR (the flexible polyurethane foam block manufacturers at European level. The association was set up in 1966 ), announces a voluntary program called "CertiPUR" in 2007. CertiPUR is a scheme highlighting the industry's commitment to the safety, health and environmental (SHE) performance of its products. To align with the CertiPUR standard, many hazardous substances are restricted or prohibited. The total amount of 2,4-TDA and 4,4'-MDA in a polyurethane foam, and both 2,4-TDA and 4,4'-MDA individual amount have upper limit of 5 ppm based on foam weight, according to the CertiPUR standard.

Registration, Evaluation, Authorisation and Restriction of Chemicals (REACH) is a European Union Regulation. REACH entered into force in June 1, 2007. It requires all companies manufacturing or importing chemical substances into the European Union to register, to evaluate, and to receive permission for these substances with a European Chemicals Agency (ECHA). ECHA launched list of SVHC (Sunstance of Very High Concern) defined in Article 57 of REACH Regulation on Nov. 28, 2008. 4,4'-MDA is one of these 15 harzardous SVHC.

U.S.Pat. Appl. No. 2005/0176838A1 describes the use of polyol composition containing at least one acrylate polyol having a hydroxyl number between 15 and 500 mg KOH/g to reduce the hydrolytic cleavage of urethane and urea bonds. The patent describes "This cleavage is evident not only in a significant deterioration in the performance characteristics but also leads to the formation of aromatic amines, such as toluenediamine (TDA) and diaminodiphenylmethane (MDA)".

U.S.Pat. No. 6,800,607 discloses a method of adding at least one organic or inorganic acid anhydride into isocyanate components, and then react the isocyanate components with polyol components to produce flexible polyurethane foams. The acid anhydrides in the polyurethane foams are further hydrolyzed to related acids especially under moist and warm conditions. These acids formed after hydrolysis block any amine catalysts present in the foams, and thus prevent redissociation of the urethane and/or urea bonds under warm and humid conditions. Unfortunately, such method can reduce polyurethane foam reactivity, as a result of the increased acidity in reacting mixture. It can only be used with more reactive aromatic isocyanates but not aliphatic or alicyclic isocyanates due to their less reactivity.

A significant draw-back from using above mentioned treatments is that such treatments can only retard the formation of TDA and MDA, but not to prevent the formation of such aromatic amines. All the examples illustrated in U.S.Pat. Appl. No. 2005/076838A1 and U.S.Pat. No. 6,800,607 report reduced but yet still significant level of TDA or MDA in the aged samples, even with the specified treatments (refer to the examples illustrated in these two documents, 2,4-TDA and 4,4'-MDA level in all foam examples far exceeds 5ppm, which is the upper limit in CertiPUR standard) .

As the flexible, low resilience polyurethane foams have unique properties which can not be replaced by other traditional resilient foam materials, therefore there is need to develop a process to produce flexible, low resilience polyurethane foam free from the use of aromatic isocyanate. Flexible, low resilience polyurethane foam based on aliphatic and/or alicyclic isocyanates provides a good solution for the need.

Owing to the much less reactivity with aliphatic and alicyclic isocyanates, they are rarely used in the preparation of polyurethane foams. Only few synthetic approaches have been developed with focus on the selections of stronger catalysts, more reactive polyisocyanate composition, polyol composition using high reactive polyols, or other production method, to produce aliphatic or alicyclic isocyanate based polyurethane foams with practical physical properties.

U.S.Pat. Appl. No. 2008/0114088 discloses a process for producing a flexible polyurethane foam, which comprises reacting a polyol mixture with polyisocyanate compound in the presence of a urethane-forming catalyst, a blowing agent and a foam stabilizer, at isocyanate index greater than 90. The polyol mixture compositions consist of polyol(A), which is a polyether polyol having an average of 2-3 hydroxy groups and a hydroxyl value of from 10 to 90 mgKOH/g, obtained by ring-opening addition polymerization of an alkylene oxide to an initiator using a double metal cyanide complex catalyst, and polyol (B), which is a polyether polyol having an average of 2-3 hydroxy groups and a hydroxyl value of from 15 to 250 mgKOH/g, monool (D), which is a polyether monool having a hydroxyl value of from 10 to 200 mgKOH/g, and optionally polyol (C), which is a polyol having an average of 2-6 hydroxy groups and a hydroxyl value of from 300 to 1,830 mg/KOH/g of at most 10 0 mass % based on the entire polyol mixture. It further discloses that the suitable isocyanate compound is selected from the group consisting of TDI, MDI, polymethylenepolyphenyl polyisocyanates (so called crude MDI), xylylene diisocyanate (XDI), isophorone diisocyanate (IPDI), hexamethylene diisocyanate, and their derivatives. However, there is no example or detail description on the use of these aliphatic and alicyclic diisocyanates and aromatic isocyantes which contain no isocyanate group linked directly to aromatic ring, such as XDI, in the preparation of any polyurethane foam according to the described method. In fact, owing to the much less reactivity of such aliphatic and alicyclic diisocyanates, disclosed polyol mixtures are difficult to be implemented using solely aliphatic and alicyclic diisocyanates (see Comparative Example C1 to C4 below).

U.S. patent No. 5,147,897, issued on Sep. 15, 1992 to Morimoto et al., disclosed the production of non-yellowing polyurethane foam using an aliphatic polyisocyanate prepolymer. The method comprises reacting the aliphatic polyisocyanate prepolymer with water in the amount of 0.4 to 5 times the isocyanate equivalent in the presence of the potassium or sodium salt of a C₂-C₁₀ alkanoic acid or diazabicycloalkene catalysts. The prepolymer is an aliphatic isocyanate-terminated prepolymer obtained from the addition polymerization of a polyol having an average molecular weight of 100 to 5,000 with an aliphatic polyisocyanate in the amount of 1.4 to 2.6 times that of the hydroxyl equivalent. The reactivity of the aliphatic isocyanate is generally lower than that of the aromatic isocyanate. When the aliphatic isocyanate is formed into a prepolymer, the mobility of the molecules further reduced, leading to further decrease in the reactivity. Owing to the reduced reactivity and high viscosity of the prepolymer, the process of Morimoto et al. can not be used in the preparation of polyurethane foams with a density of less than 80 kg/m³, and can not be use in the preparation of flexible, low resilience polyurethane foam.

U.S. Pat. No. 6,242,555, issued on June 5, 2001 to Du Prez et al., describes a reaction injection molding (RIM) process for the production of a micro-cellular or non-cellular, light stable elastomeric, flexible or semi-flexible polyurethane having a density of at least 900 kg/m³ (56 pcf, pounds per cubic foot). The invented method comprises the reaction of an isophorone diisocyanate trimer/monomer mixture having an NCO content of from 24.5 to 34 weight % and an isocyanate-reactive composition in the presence of a catalyst selected from organolead, organobismuth, and organotin catalysts. The isocyanante-reactive composition comprises (1) low unsaturated polyether polyol made with DMC (double metal cyanide) catalysts as described in U.S. Pat. No. 5,470,813 and U.S. Pat No. 5,498,583 and having an average nominal functionality of from 2 to 4 and an average equivalent weight of from 800 to 4,000 g/mol, (2) from about 3 to about 20 weight % of at least one chain extender having only aliphatic or alicyclic OH groups as functional groups, a functionality of 2, an equivalent weight up to 80 g/mol, and a primary OH content of at least 50%, and (3) from about 2 to about 10% by weight of a co-catalytic system comprising catalysts having from 2 to 3 functional aliphatic >NH, -NH₂ or -OH groups and an equivalent weight of up to 150 g/mol; at least one of said catalysts being a secondary or primary amine group and at least one of said catalyst being an amine-initiated catalyst. This invention provided a method to produce non-yellowing polyurethane materials. It however can only be used in the reaction injection molding process and in the production of dense molding parts.

Japan Pat. Appl. No. P 2003-261643A, published on Sept. 19, 2003 to Mitsui-Takeda Chemicals Inc. discloses a method to produce alicyclic polyisocyanate based polyurethane foam. Novel (more expensive and limited production) norbornanediisocyanate (2,5(2,6)-Bis(isocyanatomethyl)bicyclo[2.2.1]heptane, commercially available as "Cosmonate NBDI" produced by Mitsui-Takeda Chemicals Inc.) is reacted with polyether polyol together with high amount of UV stabilizers to produce hardly yellowing polyurethane foams. There is no description on the foam mechanical properties, and no example to illustrate its use in the manufacturing of flexible, low resilience polyurethane foam.

Japan Pat. Appl. No. JP 2006-257187A, published on Sept. 28, 2006 to Kurashiki Boseki Corp. discloses a process to produce hardly yellowing polyurethane foam for clothes, sanitary, or cosmetic use. The polyurethane foam is manufactured by reacting polyether polyol with polyisocyanate compositions consisting of a mixture of (isophorone diisocyanate (IPDI) and/or IPDI trimer or derivative thereof) : (trimer of hexamethylene diisocyante (HDI) and/or HDI derivative thereof) by mass regulated so as to be (70-30):(30-70). It is further explained that the resulted foams have improved foam hardness and low humid compression set, owing to the increase in cross-linking. There is no description on the use of the polyisocyanate compositions in the production of flexible low resilience foam. Flexible low resilience foams produced by using these polyisocyanate compositions can be hard owing to the large amount of cross-linking, hence results in processing difficulty. Besides, due to the reduced isocyanate content (NCO%) in such trimers and derivatives, it requires much higher amount of isocyanates mixture than using aliphatic or alicliclic diisocyanates to achieve any specified isocyanate index compared with using diisocyanates solely. The cost of these polyurethane foams is increased. The increased isocyanates also means the increase of hard-segment in the polymer, which may result in accelerated deterioration.

Japan Pat. Appl. No. P 2001-72738A, published on March 21, 2001 to INOAC MTP KK. discloses a polyurethane foam having excellent in water resistance and not undergoing discoloration by sunlight produced by reacting aliphatic diisocyanate with a polyol having an oxyethylene content less than 18 parts by weight based on 100 parts by weight of total polyol oxyalkyene, in the presence of a catalyst selected from diazabicycloalkenes or their phenyl salts, together with an alkali metal salt of a weak acid. 1,8-diazabicyclo-5,4,0-undecene-5 (DBU), phenyl salt of DBU, 1,5-diazabicyclo-4,3,0-nonene-5 (DBN), phenyl salt of DBN are especial useful. Owing to the lower boiling point of these non-isocyanate-reactive diazabicycloalkenes, e.g. DBU has a boiling point of only 100°C (212°F) at 532Pa, such catalysts will remain in the finished foam and gradually emit from the foam. As a result, the produced polyurethane foams have significant amount of VOC emission.

Japan Pat. Appl. No. P 2003-012756A, published on January 15, 2003 to INOAC MTP KK. discloses a hardly yellowable polyurethane foam produced from using alicyclic diisocyanate to react with amine-terminated polyols. It further describes that these polyol consists solely of oxypropylene unit. These amine-teminated polyoxypropylenes are expensive and with only limit supply. It is hard to obtain useful amine-teminated polyoxypropylene molecules for the production of flexible, low resilience polyurethane foam.

Therefore, there is a need to develop flexible, low resilience polyurethane foams which can be easily produced by using aliphatic and/or alicyclic diisocyanates to react with commercially available polyether polyols, and such foams can be manufactured on common polyurethane foam producing equipments without further modification.

### Objectives of the Invention

The objective of this invention is to provide a method to produce flexible, low resilience polyurethane foam based on a reaction product of isocyanate-reactive component with an isocyanate component substantially free of aromatic isocyanate which contains isocyanate group attached directly to aromatic ring

Another objective of this invention is to provide a novel isocyanate-reactive componentcomposition suitable to react with aliphatic isocyanates and/or alicyclic isocyanates, and/or aromatic isocyanates which contain no isocyanate group attached directly to aromatic ring together with one or more catalysts, water, surfactant as cell regulator, and other additives for the preparation of flexible, low resilience polyurethane foams.

Another objective of this invention is to provide a method for the preparation of non-yellowing flexible, low resilience polyurethane foams.

Another objective of this invention is to provide a one-shot process in the preparation of non-yellowing polyurethane low resilience foams with a relative lower density.

Another objective of this invention is to provide a method for the preparation of molded flexible, low resilience polyurethane foams.

Another objective of this invention is to provide a method for the preparation of flexible, low resilience polyurethane foams which will not generate toxic aromatic amines while undergo deterioration in hot and humid circumstance.

Another objective of this invention is to provide a method for the preparation of flexible, low resilience polyurethane foams which is catalyzed by non-volatile catalysts and emits reduced level of VOC.

Another objective of this invention is to provide a method for the preparation of polyurethane low resilience foam of improved mechanical properties, especially tear strength, tensile strength, and elongation at isocyanate index range from 75 to 105.

Another objective of this invention is to prepare flexible, low resilience polyurethane foams which are excellent in low resiliency and durability without the use of plasticizer and shows little change in hardness against a change in temperature and at the same time, has high air permeability.

Another objective of this invention is to provide a method for the preparation of bio-degradable polyurethane low resilience foam using renewable bio-based polyols.

Another objective of this invention is to provide novel non-yellowing polyurethane low resilience foams useful in the fields of brassiere pad, shoulder pad, bedding, pillows, furniture cushions, and automotive seat cushions.

Another objective of this invention is to provide a method for the preparation of polyurethane foam with a reduction or elimination of conventional and/or reactive tertiary amine catalyst, to reduce automotive interior fogging.

### Summary of the Invention

According to one embodiment of the present invention, a flexible, low resilience polyurethane foam is disclosed. The flexible, low resilience polyurethane foam according to the present invention comprises a reaction product of:
a. an isocyanate component substantially free of aromatic isocyanates which contain isocyanate group attached directly to aromatic ring;
b. an isocyanate-reactive mixture comprising
   (b1) a first isocyanate-reactive component having at least 2.6 isocyanate-reactive groups, preferably 2.6-6.5 isocyanate-reactive groups, more preferably 2.65-6.0 isocyanate-reactive groups, most preferably 2.7-5.5 isocyanate-reactive groups, hydroxyl equivalent weight of less than 800, preferably 80-800, more preferably 100-700, most preferably 110-600, a hydroxyl number greater than 70 mg KOH/g, preferably 70-700 mg KOH/g, more preferably 80-560 mg KOH/g, most preferably 90-510 mg KOH/g,
   (b2) a second isocyanate-reactive component having average hydroxyl functionality of less than 6.0, preferably 1.8-6.0, more preferably 1.85-4.5, hydroxyl equivalent weight of from 600 to 6,000, preferably 700-5,000, more preferably 800-4,500, hydroxyl number of 9-94 mg KOH/g, preferably 19-80 mg KOH/g, more preferably 14-70 mg KOH/g, primary hydroxyl groups content of at least 30 parts by weight, preferably at least 40 parts by weight, more preferably at least 51 parts by weight, based on 100 parts by weight of total weight of the hydroxyl groups of said second isocyanate-reactive component,
   wherein said first isocyanate-reactive component is used in an amount of from 20-90 parts
   by weight, preferably 20-70 parts by weight, and said second isocyanate-reactive component is used in an amount of 10-80 parts by weight, preferably 30-80 parts by weight, both based on 100 parts by weight of said isocyanate-reactive mixture;
c. catalyst; and
d. optionally, one or more components selected from the group consisting of water, surfactant, cross-linker, and additives; and
the optional cross-linker has a weight average molecular weight of 60-420 g/mol, and at least 2 isocyanate-reactive functional groups; if the cross-linker is used, it is used in an amount of 0.2-15 parts by weight, preferably 1.2-12 parts by weight, based on 100 parts by weight of said isocyanate-reactive mixture;
wherein the foam is produced at an isocyanate index of from about 65-110, preferably about 70-105, more preferably about 75-105.

Optionally, said isocyanate-reactive component may further comprise from 0 to 40 parts by weight based on 100 parts by weight of isocyanate-reactive component of polymer polyol having a solid content from 5 to 55 parts by weight based on 100 parts by weight of polymer polyol, and having a hydroxyl number of from 15 to 50 mg KOH/g.

The said isocyanate-reactive component may comprise from 0 to 3.5 parts by weight based on 100 parts by weight of total foam mass, of a polyoxypropylene (b3), as cell opener, having an nominal hydroxyl functionality of 1, and a weight-average molecular weight of from 800 to 8,500 g/mol.

In another embodiment, the present invention concerns a process for the preparation of flexible, low resilience polyurethane foams. The invented process includes the preparation of a foam formulation comprising an isocyanate reactive mixture, an aliphatic polyisocyanates, and/or alicyclic polyisocyanates and/or aromatic isocyante components which contain no isocyanate group attached directly to aromatic ring, water, catalyst for forming urethane linkages in the foam formulation and a foam stabilizer/surfactant, followed by foaming and thereafter curing of the foam formulation. The isocyanate-reactive blend is selected from the above-described isocyanate-reactive compositions.

Still in another embodiment, the present invention concerns a method to produce the flexible, low resilience polyurethane foam by using the one-shot process.

Still in another embodiment, the present invention concerns flexible, low resilience polyurethane foams prepared by the above-described process and having a density of from 16-160 kilogram/cubic meter (1 to 10 pounds/cubic foot).

Still in another embodiment, the present invention concerns a method to produce the flexible molded polyurethane low resilience foam.

In the preparation of the invented flexible, low resilience polyurethane foams, no particular modifications of the current polyurethane foam production equipments are needed.

The isocyanate-reactive compositions of the present invention provide greater latitude in the formulation components in the preparation of flexible, low resilience polyurethane foams with broad density and hardness ranges.

### Detailed Description of the Preferred Embodiment

This invention relates to a novel flexible, low resilience polyurethane foam prepared by reacting an isocyanate component substantially free of aromatic isocyanate which having isocyanate group attached directly to aromatic ring with a disclosed isocyanate-reactive component together with catalyst; and optionally, with water, surfactant, cross-linker and additive.

The isocyanate component is one or more isocyanates selected from the group consisting of aliphatic isocyanates, alicyclic isocyanates and aromatic isocyanates which contain no isocyanate group attached directly to aromatic ring. The present invention provides flexible, low resilience polyurethane foams with excellent processabilities and low foam resilience when aliphatic isocyanates and/or alicyclic isocyanates and/or aromatic isocyanates which contain no isocyanate group attached directly to aromatic ring are used. Furthermore, the present invention discloses a one-shot method for the preparation of flexible, low resilience polyurethane foams of wide hardness ranges without the use of additional blowing agents other than water.

According to the present invention, a new aliphatic isocyanate or alicyclic isocyanate or aromatic isocyanate which contains no isocyanate group attched directly to aromatic ring based polyurethane material is disclosed. The invented polyurethane material is suited in the production of flexible, low resilience polyurethane foams, useful as a material in brassiere pads, shoulder pads, and also suitable to be used in bedding, pillows, furniture cushions, mats, and automobile seat cushions. It is particularly suitable for bedding and pillows.

In the one-shot process according to the invention, the formulated materials are injected into a mixing head simultaneously and then poured into a mould or onto a conveyer. The foaming reaction proceeds very fast. The rising froth completely solidifies substantially within 2 to 7 minutes, depending on the catalyst used. The resulted foam is then post cured for about 24 hours to achieve its final properties.

In the process according to the invention, the reaction composition comprises an isocyanate component, an isocyanate-reactive component, catalyst, surfactant, water as blowing agent and additives known per se. Other additives such as pigments/dyes, antioxidants, UV absorbents, flame retardants, fillers, recycle foam powder, stabilizers, antimicrobial compounds and antistatic agents can also be used, if desired.

The isocyanate component comprises aliphatic diisocyanate monomers and/or alicylic diisocyanate monomers and/or aromatic diisocyanate monomers which contain no isocyanate group attached directly to aromatic ring; or a blend of aliphatic diisocyanate monomers and/or alicyclic diisocyanate monomers and/or aromatic diisocyanate monomers containing no isocyanate group attached directly to aromatic ring, and trimer which is a trimerization product of aliphatic diisocyanate monomers or alicyclic diisocyanate monomers or aromatic diisocyanate monomers which contain no isocyanate group attached directly to aromatic ring. The said isocyanate component has a NCO content of 20.5-50 parts by weight based on 100 parts by weight of total isocyanate component and a calculated functionality of from 2 to 3. The aliphatic diisocyanate monomers or alicyclic diisocyanate monomers or aromatic isocyanate monomers which contain no isocyanate group attached directly to aromatic ring may be at least one selected without limitation from the followings: hexamethylene diisocyanate, bicycloheptane triisocyanate, undecane triisocyanate, isophorone diisocyanate, dicyclohexylmethane diisocyanate, methylcyclohexane diisocyanate, dimethylcyclohexane diisocyanate, xylylene diisocyanate, tetramethylxylylene diisocyanate, their dimmers and their trimers. Among these isocyanates, hexamethylene diisocyanate and isophorone diisocyanate are especially preferred.

In addition to the isocyanate monomer and trimer made from aliphatic isocyanate and/or alicyclic isocyanate and/or aromatic isocyanate containing no isocyanate group attached directly to aromatic ring, the isocyanate component may optionally further comprise up to 35% by weight, based on the total weight of isocyanate component, of prepolymer which contains 2 to 4 isocyanate function groups and is made from aliphatic isocyanates and/or alicyclic isocyanates and/or aromatic isocyanates containing no isocyanate group attached directly to aromatic ring.

Said isocyanate component is used in an isocyanate index of about 65-110, preferably about 70-105, more preferably about 75-105.

The isocyanate-reactive mixture comprises :
(b1) a first isocyanate-reactive component having at least 2.6 isocyanate-reactive groups, preferably 2.6-6.5 isocyanate-reactive groups, more preferably 2.65-6.0 isocyanate-reactive groups, most preferably 2.7-5.5 isocyanate-reactive groups, hydroxyl equivalent weight of less than 800, preferably 80-800, more preferably 100-700, most preferably 110-600, a hydroxyl number greater than 70 mg KOH/g, preferably 70-700 mg KOH/g, more preferably 80-560 mg KOH/g, most preferably 90-510 mg KOH/g,
(b2) a second isocyanate-reactive component having average hydroxyl functionality of less than 6.0, preferably 1.8-6.0, more preferably 1.85-4.5, hydroxyl equivalent weight of from 600 to 6,000, preferably 700-5,000, more preferably 800-4,500, hydroxyl number of 9-94 mg KOH/g, preferably 19-80 mg KOH/g, more preferably 14-70 mg KOH/g, primary hydroxyl groups content of at least 30 parts by weight, preferably at least 40 parts by weight, more preferably at least 51 parts by weight, based on 100 parts by weight of total weight of the hydroxyl groups of said second isocyanate-reactive component,
wherein said first isocyanate-reactive component is used in an amount of from 20-90 parts by weight, preferably 20-70 parts by weight, and said second isocyanate-reactive component is used in an amount of 10-80 parts by weight, preferably 30-80 parts by weight, both based on 100 parts by weight of said isocyanate-reactive mixture; and
optionally, cross-linker having a weight average molecular weight of 60-240 g/mol, and at least 2 isocyanate-reactive groups; if the cross-linker is used, it is used in a amount of 0.2-15 parts by weight, preferably 0.5-15 parts by weight, more preferably 0.5-12 parts by weight, most preferably 1.2-12 parts by weight, based on 100 parts by weight of said isocyanate-reactive mixture.

Optionally, said isocyanate-reactive component may further comprise from 0-50 parts by weight, preferably 0-40 parts by weight, based on 100 parts by weight of isocyanate-reactive component, of polymer polyols having a solid content of from 5 to 55 parts by weight, preferably 10-45 parts by weight based on 100 parts by weight of polymer polyols, and having a hydroxyl number of from 15 to 50 mg KOH/g.

Optionally, the said isocyanate-reactive component may comprise0-5.0 parts by weight, preferably 0-3.5 parts by weight, based on 100 parts by weight of total foam mass, of a polyoxypropylene (b3) as cell opener, having an nominal hydroxyl functionality of 1, and a weight average molecular weight of 400-9,600 g/mol, preferably 600-9,000 g/mol, more preferably 800-8,500 g/mol.

The isocyanate-reactive component which is useful in the present invention include a variety of compounds. Good examples of them include without limitation the followings: (a) polyether polyols, comprising alkylene oxide adducts of polyhydroxyalkanes; (b) poly(tetramethylene-ether) glycol; and (c) poly(trimethylene-ether) glycol.

Examples of the above-mentioned alkylene oxide adducts of polyhydroxyalkanes include the alkylene oxide adducts of ethylene glycol, propylene glycol, diethylene glycol, dipropylene glycol, trimethylene glycol, propanediol, butanediol, pentanediol, tripropylene oxide adduct of glycerol, trimethylolpropane monoallyl ether, 1,1,1-trimethylolethane, 1,1,1-trimethylolpropane, 1,2,3-trihydroxyhexane, glycerine, pentaerythritol, polycaprolactone, xylitol, arabitol, sorbitol and mannitol. Among the alkylene oxide used, ethylene oxide, propylene oxide, and butylene oxide are most preferred.

Polyether polyol made from this type of initiators is commonly made through an anionic polymerization process, whereby the alkylene oxide is combined with an initiator compound and a strong basic catalyst such as potassium hydroxide or certain organic amines. Polymerizing alkylene oxides using these strong basic catalysts can results in increased amount of unsaturation, and reduces average functionality in the resulting polyether polyols. These unsaturation components have strong odor, and can retard the urethane formation during the reaction of polyols with isocyanates.

Double metal cyanide (DMC) complexes are well-known catalysts for alkylene oxide polymerization. These active catalysts can be used to produce polyether polyols having extra-low unsaturation compared with similar polyols made using strong basic catalysts. Polyether polyols with unsaturation level as low as 0.02meq/g can be produced by using DMC catalysts. Polyether polyols based on DMC, such as the product described in EP 0894108B1 issued on Nov. 7, 2001, can be used for the preparation of flexible, low resilience polyurethane foam with reduced odor and having improved mechanical properties, hence are the preferred polyether polyols in the present invention.

In fact, any material having active hydrogen as determined by the Zerewitinoff test may be used as a component of polyether polyols. For example, amine-terminated polyether polyols are known and may be utilized.

In present invention, the first isocyanate-reactive component (b1) have at least 2.6, preferably 2.6-6.5, more preferably 2.65-6.0, most preferably 2.7-5.5 isocyanate reactive groups to achieve the cross-linking degree requirement in the preparation of low resilience foam. Under these functional group numbers, to ensure sufficient reactivity, the hydroxyl group equivalent weight should be less than 800. A too higher hydroxyl equivalent weight can lower polyol reactivity, therefore can not be used in present invention to react with low reactivity isocyanate. Isocyanate-reactive component with a too lower hydroxyl equivalent weight, can not be used to achieve polymer chain requirement for a low resilience foam. Therefore, preferred hydroxyl group equivalent weight is 80-800, more preferably 100-700, and most preferably 110-600.

The second isocyanate-reactive component (b2) used in present invention has a hydroxyl functionality of less than 6.0, to satisfy physical property requirement of the low resilience foam. A too higher hydroxyl functionality requires higher hydroxyl equivalent weight, therefore reduces reactivity and can not be used in present invention. On the contrary, a too lower hydroxyl functionality can result in poor foam property, especially tensile and tear strength. Preferred hydroxyl functionality is 1.8-6.0, more preferably 1.85-4.5.

Preferred hydroxyl equivalent weight for the second isocyanate-reactive component (b2) ranges from 600 to 6,000, more preferably 700-5,000, and most preferably 800-4,500. A too higher hydroxyl equivalent weight can reduce reactivity and can not be used in present invention. A too lower hydroxyl equivalent weight will increase excessively polymer cross-linking density, and harden excessively the resulted faom and increase hardness sensitivity toward temperature variation.

To achieve preferred hydroxyl functionality and hydroxyl equivalent weight range for the second isocyanate-reactive component (b2), more reactive polyol terminated with primary hydroxyl group is required. To satisfy the need in the present invention, to react with low reactive isocyanate component to prepare low resilience foam, the selected second isocyanate-reactive component (b2) needs to have at least 30 parts by weight, preferably at least 40 parts by weight, and more preferably at least 51 parts by weight of primary hydroxyl end group content, based on the total weight of the hydroxyl groups of said second isocyanate-reactive component.

Another class of polyols, which can be used in this invention, is the above-mentioned poly(tetramethylene-ether) glycol. Poly(tetramethylene-ether) glycol is a ring opening polymerization product of tetrahydrofuran (THF). Poly(tetramethylene ether) glycol is a polyether polyol. It is also known as PTMEG or polytetrahydrofuran and various tradenames such as "Terathane" and "PolyTHF". It is prepared by acid-catalyzed polymerization of tetrahydrofuran. The resulting polymers are of moderate size, usually having number-average molecular weights of between 250 and 3,000 g/mol. All the hydroxyl groups in these poly(trimethylene-ether) glycols are primary hydroxyl groups. According to the present invention, poly(tetramethylene-ether) glycol having an average-molecular weight of 800-3,000, more particularly 1,200-2,400, are the especially preferred poly(tetramethylene-ether) glycol.

The third class of polyol, which can be used in this invention, is poly(trimethylene-ether) glycol. Poly(trimethylene-ether) glycol can be produced from oxetane ring opening polymerization initiated by 1,3-propanediol, or from a novel multi-stage continuous polycondensation reaction of 1,3-propanediol as described in U.S. Pat. No. 7,074,968, issued on July 11, 2006 to Sunkara et al. 1,3-propanediol obtained from fermentation of bio-mass can be used as feedstock in the described production process to produce renewable, and bio-degradable poly(trimethylene-ether) glycols. These poly(trimethylene-ether) glycols have primary hydroxyl groups and have low melting points and are highly flexible. Among the poly(trimethylene-ether) glycols, those with weight-average molecular weight of 800-3,000, more particularly 1,200-3,000 g/mol are most preferred for the preparation of the flexible, low resilience polyurethane foam. Another incentive of using such poly(trimethylene-ether) glycols comes from their bio-degradable nature. Flexible, low resilience polyurethane foam can be produced by using these bio-based poly(trimethylene-ether) glycols at levels as high as 50 weight percent of total foam weight. Bio-degradable, low resilience polyurethane foam can then be produced.

The preferred polyols employed in this invention include the poly(oxypropylene-oxyethylene) glycols. Ethylene oxide, when used, can be incorporated in any fashion along the polymer chain. The ethylene oxide can be incorporated either in the internal blocks, as terminal blocks, or may be randomly distributed along the polyol chain. The most preferred polyol is poly(oxypropylene-oxyethylene) glycols with ethylene oxide terminal blocks.

The cross-linker component may be cross-linker with the functional group of OH or NH, or NH₂ groups, more particularly the aliphatic or alicyclic OH or NH, or NH₂ groups, having weight-average molecular weight of 40-640, particularly 60-420 g/mol and having at least two isocyanate-reactive functional groups, wherein if used, said cross-linker is used in an amount of from 0.2-15, preferred 0.5-15, particularly preferred 0.5-12, most preferred 1.2-12 parts by weight based on 100 parts by weight of said isocyanate-reactive mixture.

Typical examples of the cross-linkers are: ethylene glycol, diethylene glycol, triethylene glycol, tetraethylene glycol, polyethylene glycols with the number-average molecular weight less than 600, propylene glycol, dipropylene glycol, polypropylene glycols with the molecular weight less than 450, butanediol, pentanediol, hexanediol, 1,1,1 -trimethylol ethane, 1,1,1-trimethylol propane, 1,2,3-trimethylol hexane, glycerine, poly(oxypropylene-oxyethylene), poly(oxypropylene), poly(oxyethylene), 2-methyl-1,3-propanediol, 3-methyl-1,5-pentanediol, 1,4-cyclohexanediol, neopenthyl glycol, 1,4,-cyclohexane dimethanol, ethylene diamine , monoethanolamine, diethanolamine, 2-amino-2-methyl-1-propanol, N-methyl-ethanolamine, isophorone diamine, and hydrazine. Preferred examples of the cross-linker are monoethanolamine and diethanolamine. Blends of several cross-linkers can also be utilized if desired.

Depends on the hardness requirement of the present low resilience foam, above-mentioned isocyanate-reactive component may contain a stably dispersed polymer polyols. The stably dispersed polymer polyol components may be any polyalkylene oxide polyol that has a polymer of ethylenically unsaturated monomers dispersed herein. Representative examples of the stably dispersed polymer polyols include polyalkylene oxide polyol in which poly(styrene acrylonitrile), and/or polyurea is dispersed. The stably dispersed polymer polyols are commercially available from several companies, including Bayer (in the name of " Polymer Polyol"), BASF (in the brand name of "Graft Polyol"), Dow (in the brand name of " Copolymer Polyol"), and Mobay (in the brand name of "PHD Polyol"). In the Bayer, BASF, and Dow products, the poly(styrene acrylonitrile) is dispersed into polyol according to a process described in U.S. Pat. No. 4,272,619, U.S. Pat. No. 4,640,935, and U.S. Pat. No. 5,494,957. Examples of the commercially available stably dispersed polymer polyol are listed in Table 1, as follows:

**TABLE 1**

| POLYALKYLENE OXIDE POLYOL | TYPE |
|---|---|
| | HS-100 |
| Bayer "Polymer Polyols" | Niax E694 |
| | Pluracol 1103 |
| BASF "Graft Polyols" | Pluracol 994LV |
| Dow "Copolymer Polyols" | Voranol 3943 |
| Mobay "PHD Polyols" | E9232 |

The stably dispersed polymer polyols can be prepared pursuant to the procedure described by Oertel in "Polyurethane Handbook" (Polyurethane Handbook, G. Oretel, ISBN 0-02-948920-2, Hanser Publisher, 1985). Any polyalkylene oxide polyol can be used as the dispersion base in the production of such stably dispersed polymer polyols. The reactivity of such stably dispersed polymer polyols depends mainly on the reactivity of the base polyol used in the preparation of such stably dispersed polymer polyols. Owing to the relatively low reactivity of the aliphatic and/or alicyclic and/or aromatic polyisocyanates which contain no isocyanate group attached directly to aromatic ring, used in present invention, a base polyol having a nominal functionality of between 2.4 and 6 (preferably between 2.4 and 5.6, most preferably between 2.4 and 5.4), an equivalent weight of between 800 and 2,000 (preferably between 800 and 1,600, most preferably between 1,000 and 1,600) g/mol, and an ethylene oxide content of from 4 to 28 (preferably between 4 and 24) weight percent, based on the weight of the base polyol, is preferred.

Depending on the processability of low resilience foam, cell opener can be added into the present isocyanate-reactive component to improve above-mentioned low resilience foam from shrinking. Typical examples of cell opener include stably dispersed polymer polyol, poly(oxypropylene-oxyethylene) copolymer having an oxyethylene content above 50 percent by weight, poly(oxybutylene-oxypropylene) copolymer having a weight average molecular weight above 800, polyethylene glycol having a weight average molecular weight above 600, polyoxypropylene a having weight average molecular weight above 400, fume silica powder having particle size less than 150 micron, polytetrafluoroethylene resin powder having particle size less than 200 micron, aliphatic carboxylic acid and its alkali metal or alkaline earth metal salt, alicyclic carboxylic acid and its alkali metal or alkaline earth metal salt, aliphatic alkane, alicyclic alkane and dimethyl silicone oil. Preferred cell openers are stably dispersed polymer polyols, poly(oxypropylene-oxyethylene) copolymer having oxyethylene content above 50 percent by weight, poly(oxybutylene-oxypropylene) copolymer having weight average molecular weight above 800, and polyoxypropylene having weight average molecular weight above 400, wherein said preferred cell openers are generally used at the level of 0.05-20, particularly 0.5-10 parts by weight, based on 100 parts by weight of all foam mass. The most preferred cell opener is polyoxypropylene having weight average molecular weight above 400, wherein said polyoxypropylene has a nominal hydroxyl functionality of 1, a weight average molecular weight of 400-9,600 g/mol, particularly 600-9,000 g/mol, more particularly 800-8,500 g/mol. The said most preferred polyoxypropylene cell opener is usually used in an amount of 0-5.0 parts by weight, particularly 0-3.5 parts by weight, based on 100 parts by weight of all foam mass. Blend of different cell openers can be employed, if desired.

Many commercially available polyurethane catalysts may be used in the preparation of the invented flexible, low resilience polyurethane foams. Typical levels of use of the catalysts are from 0.05 to 2.0 php (parts by weight per hundred parts by weight of polyol). Representative catalysts include: (1) tertiary amines such as bis(2,2'-dimethylamino)ethyl ether, bis(dimethylaminoethyl) ether, N-methylmorpholine, N-ethylmorpholine, N,N-dimethylbenzylamine, N,N-dimethylethanolamine, N,N,N',N'-tetramethyl-1,3-butanediamine, pentamethyldipropylenetriamine, trimethylamine, triethylamine, triethanolamine, triethylenediamine and pyridine oxide; (2) diazobicycloalkenes, such as 1,5-diazabicyclo-(4,3,0)nonene-5, 1,8-diazabicyclo-(5,4,0)undecene-7, 1,8-diazabicyclo-(5,3,0)decene-7,1,5-diazabicyclo-(5,4,0)undecene-5, 1,4-diazabicyclo-(3,3,0)octene-4 and organic salts of the diazabicycloalkenes such as phenol salt; (3) strong bases such as alkali and alkaline earth metal alkoxides, hydroxides, and phenoxides; (4) acidic metal salts of strong acids such as stannous chloride, ferric chloride, antimony trichloride, bismuth chloride and nitrate; (5) chelates of various metals such as those obtained from acetylacetone, benzoylacetone, trifluoroacetylacetone, ethyl acetoacetate, salicylaldehyde, cyclopentanone-2-carboxylate, acetylacetoneimine, bis-acetylacetone- alkylenediimines and salicylaldehydeimine, with various metals such as Be, Mg, Zn, Pb, Ti, Zr, Sn, Bi, Mo, Mn, Fe, Co and Ni; (6) alcoholates and phenolates of various metals such as Sn(OR)₄, Sn(OR)₂, Ti(OR)₄, and Al(OR)₃, wherein R is alkyl or aryl, and the reaction products of alcoholates with carboxylic acids, beta-diketones and 2-(N,N-dialkylamino)alkanols, such as chelates of titanium obtained by this or equivalent procedures; (7) salts of organic acids with a variety of metals, such as alkali metals and alkaline earth metals such as calcium hexanoate, stannous acetate, stannous octoate and stannous oleate; (8) organometallic derivatives of tetravalent tin, trivalent and pentavalent As, Sb, and Bi, and metal carbonyls of iron and cobalt.

Among above-mentioned catalysts, the organotin compounds are found especially useful in preparing the flexible, low resilience polyurethane foams of this invention. Preferred organotin compounds are dialkyltin salts of carboxylic acids, such as dibutyltin diacetate, dibutyltin dilaureate, dimethyltin dilaureate, dibutyltin maleate, dilauryltin diacetate and dioctyltin diacetate. Other useful organotin compounds are trialkyltin hydroxide, dialkyltin oxide, dialkyltin dialkoxide, dialkyltin dichloride, and dialkyltin mercaptide. Example of these compounds includes trimethyltin hydroxide, tributyltin hydroxide, trioctyltin hydroxide, dibutyltin oxide, dioctyltin oxide, dilauryltin oxide, dibutyltin dichloride, dioctyltin dichloride, dibutyltin dimercaptide, and dimethyltin dimercaptide. Said organotin compounds are generally used at the level of about 0.05-0.8 percent by weight, particularly about 0.15-0.55 percent by weight of the invented isocyanate-reactive component (b).

Another useful catalyst in the preparation of the invented flexible, low resilience polyurethane foam is salts of Br⌀nsted acids with a variety of alkali maetals or alkaline earth metals. Sodium bicarbonate or sodium carbonate is found especially useful in preparing the flexible, low resilience polyurethane foams of this invention. Said salts of Br⌀nsted acids with a variety of alkali maetals or alkaline earth metals are generally used at the level of about 0.01-0.8 percent by weight, particularly about 0.1-0.6 percent by weight of the invented isocyanate-reactive component (b).

One or more surfactants may also be employed in the foam-forming composition. The surfactants lower the bulk surface tension, promote the nucleation of the bubbles, stabilize the rising foam and emulsify the incompatible ingredients. The surfactants typically used in the polyurethane foam applications are polysiloxane- polyoxyalkylene copolymers and are generally used at the levels of from about 0.2 to about 3 % by weight, preferably from about 0.6 to about 2.5% by weight, based on the total isocyanate-reactive mixture. Traditional surfactants used in the preparation of aromatic diisocyanate based polyurethane foam can also be used in the present invention.

Water is used in an amount of from 0.5 to 6.5 parts by weight based on 100 parts by weight of the isocyanate-reactive component, to produce carbon dioxide by reacting with the isocyanate, to act as the blowing agent for the foam reaction. Additionally, a combination of water and other known auxiliary blowing agents may be employed, if desired. The direct use of carbon dioxide, either as a gas or as a liquid, as the auxiliary blowing agent in addition to water, is especially preferred. Adjusting the atmospheric pressure during foam-forming reaction and/or using mechanical frothing techniques, as suggested in WO 93/24304 issued on Dec. 9, 1993 and U.S. Pat. No. 5,194,453 issued on Mar. 16, 1993, to vary the foam density is also found useful.

Other additives may be incorporated optionally in the foam-forming composition of the present invention. These additional additives include, but are not limited to, pigments, antioxidants, UV absorbents, UV stabilizers, flame retardants, fillers, recycle-foam powder, stabilizers, antimicrobial compounds and antistatic agents. Such additives should not have a detrimental effect on the properties of the flexible, low resilience polyurethane foam.

The invented flexible, low resilience polyurethane foam can be formed using both molded method or slabstock method. Molded method is a method wherein a reactive mixture is injected, foamed and molded in a close mold. Slabstock method means the reactive mixture is poured onto a conveyor belt and foamed in an open system.

The invented flexible, low resilience polyurethane foams have density ranging from about 10 to about 200 kilogram/cubic meter, particularly from about 16 to about 160 kilogram/cubic meter, as measured according to JIS K6400 method (1997 edition).

The invented flexible, low resilience polyurethane foams have a ball resilience less than 20%, particularly less than 15%, as measured according to JIS K6400 method (1997 edition)

The invented flexible, low resilience polyurethane foam has foam hardness similar to those as expected in the art for common flexible polyurethane foam. In one embodiment, the invented foam has a hardness below 150N/314cm². In another embodiment, the invented foam has a hardness 6-120N/314cm², or 6-90N/314cm². Hardness of the invented flexible polyurethane foam can be modified by adjusting the ratio of the first isocyanate-raective component (b1) to the second isocyanate-reactive component (b2), together with selecting appropriate isocyanate index. Using more the second isocyanate-reactive component (b2), together with isocyanate index lower than 80, IFD25% hardness of the invented flexible, low resilience polyurethane foam can be reduced to 6N/314cm². Using more the first isocyanate-reactive component (b1), and isocyanate index not less than 95, IFD25% hardness of the invented flexible, low resilience polyurethane foam can be increased to 120N/314cm². The IFD25% foam hardness is measured according to JIS K6400 method (1997 edition). In general, the flexible, low resilience polyurethane foam useful in pillow and mattress requires IFD25% hardness in the range from 12 to 24 N/314cm², to acquire load bearing and comfortability balance. Application like athletic pad or helmet requires foam with high hardness, to achieve vibration and shock absorption.

### Embodiments

In the following detailed descriptions, the symbols, terms and abbreviation as used shall have the following definitions:
ISO 1 pertains to isophorone diisocyanate, commercially available as Desmodur I, produced by Bayer AG.
ISO 2 pertains to a mixture of 50 percent by weight of isophorone diisocyanate (Desmodur I) and 50 percent by weight of hexamethylene diisocyanate trimer (commercially available as Desmodur N3600), both produced by Bayer AG.
ISO 3 pertains to toluene diisocyanate, the composition of 80 percent by weight of 2,4-toluene diisocyanate and 20 percent by weight of 2,6-toluene diisocyanate, produced by Bayer AG.
ISO 4 pertains to hexamethylene diisocyanate, commercially available as Desmodur H, produced by Bayer AG.
ISO 5 pertains to hexamethylene diisocyanate trimer, a trimerization product of hexamethylene diisocyanate, commercially available as Desmodur N3600, produced by Bayer AG.
ISO 6 pertains to xylylene diisocyanate, commercially available as Takenate 500, produced by Mitsui-Takeda Chemicals Inc.
P1 pertains to a glycerin initiated polyoxypropylene, having average molecular weight of 550 g/mol, and the hydroxyl number of 310 mgKOH/g, commercially available as YUKOL 1030, produced by SK Chemicals of Korea.
P2 pertains to a sorbitol initiated polyoxypropylene, having an average hydroxyl equivalent weight of about 117.
P3 pertains to a poly(tetramethylene-ether) glycol, having hydroxyl equivalent weight of about 900, produced by Dairen Chemical Corp of Taiwan.
P4 pertains to a poly(trimethylene-ether) glycol produced from bio-based 1,3-propanediol, having average hydroxyl equivalent weight of about 1,070, and an APHA color of around 25, produced by E.I. du Pont.
P5 pertains to a low-unsaturated polyether polyol, made by the polyaddition of propylene oxide to dipropylene glycol initiator with a DMC catalyst, then capped with ethylene oxide, having average molecular weight of 4,000 g/mol, primary hydroxyl functional group content of about 87 weight % of total hydroxyl group weight, hydroxyl value of about 28 mgKOH/g, and nominal functionality of 2, as sold by Bayer AG, commercially available as ACCLAIM POLYOL 4220N.
P6 pertains to a low-unsaturated polyether polyol, made by the polyaddition of propylene oxide to dipropylene glycol initiator with a DMC catalyst, having average molecular weight of 4,000 g/mol, hydroxyl value of about 28 mgKOH/g, having an unsaturation level of 0.005 meq/g, 100 weight % of secondary hydroxyl functional groups, and a nominal functionality of 2, as sold by Bayer AG, commercially available as ACCLAIM POLYOL 4200.
P7 pertains to a low-unsaturated polyether polyol, made by the polyaddition of propylene oxide to 1,1,1-trimethylol propane initiator with a DMC catalyst, having average molecular weight of 3,000, hydroxyl value of about 57.6 mgKOH/g, having unsaturation level of 0.005 meq/g, 100 weight % of secondary hydroxyl functional groups, and nominal functionality of 3, as sold by Bayer AG, commercially available as ACCLAIM POLYOL 3300N.
P8 pertains to a low-unsaturated polyether polyol, made by the polyaddition of propylene oxide to dipropylene glycol initiator with a DMC catalyst, then capped with ethylene oxide, having average molecular weight of 2,000 g/mol, hydroxyl value of about 56 mgKOH/g, primary hydroxyl functional group content about 87 weight % of total hydroxyl group weight, and nominal functionality of 2, as sold by Bayer AG, commercially available as ACCLA1M POLYOL 2220N.
P9 pertains to a low-unsaturated polyether polyol, made by the polyaddition of propylene oxide to dipropylene glycol initiator with a DMC catalyst, having average molecular weight of 8,000 g/mol, hydroxyl value of about 14 mgKOH/g, 100 weight % of secondary hydroxyl functional groups, and nominal functionality of 2, as sold by Bayer AG, commercially available as ACCLAIM POLYOL 8200.
P10 pertains to a poly(oxypropylene-oxyethylene) copolymer made by the polyaddition of propylene oxide to dipropylene glycol initiator with a potassium hydroxide catalyst, then capped with ethylene oxide, having oxyethylene content of 19 weight %, having primary hydroxyl group content of 63 weight % based on weight of total hydroxyl groups, average-molecular weight of 2,000 g/mol, hydroxyl value of about 56.1 mgKOH/g, having unsaturation level of 0.03 meq/g, and nominal functionality of 2.
P11 pertains to a poly(oxypropylene-oxyethylene) copolymer made by the polyaddition of propylene oxide to sorbitol initiator with a potassium hydroxide catalyst, then capped with ethylene oxide. The poly(oxypropylene-oxyethylene) copolymer contains 28 weight % of oxyethylene, and has a primary hydroxyl group content of 85 percent by weight, based on total weight of the hydroxyl groups, a hydroxyl value of about 31.3 mg KOH/g, and a nominal functionality of 6.
P12 pertains to a polymer polyol, with 45 weight % of styrene-acrylonitrile copolymer dispersed, having the hydroxyl value of 28.5 mgKOH/g. The base polyol is a randomly fed EO-PO polyol triol with the equivalent weight of 1,050, as sold by Bayer AG, commercially available as ARCOL POLYOL HS-100.
P13 pertains to a monool made by the polyaddition of propylene oxide to butanol initiator with a potassium hydroxide catalyst, having a hydroxyl number of 8.5 mgKOH/g.
DEOA is diethanolamine, with purity above 99 weight %, acquired from Sigma-Aldrich.
PEG 400 is reagent grade of poly(ethylene glycol) with average molecular weight of 400, purity above 98.5%, acquired from Sigma-Aldrich.
Glycerin is GC reagent grade of glycerin of purity above 99%, acquired from Sigma-Aldrich.
SC is 2M aqueous solution of sodium carbonate, made from de-ion water and reagent grade sodium carbonate of purity above 99%, acquired from Sigma-Aldrich.
SBC is 0.5M aqueous solution of sodium bicarbonate, made from de-ion water and reagent grade sodium bicarbonate of purity above 99%, acquired from Sigma-Aldrich.
DC 5950 is a polysiloxane- polyoxyalkylene copolymer surfactant sold by Air Products and Chemicals Inc., commercially available as DABCO DC 5950.
DC 5179 is a low emission version of polysiloxane- polyoxyalkylene copolymer surfactant sold by Air Products and Chemicals Inc., commercially available as DABCO DC 5179.
Niax A-230 is a tertiary amine mixture, sold by Chemtura Corp.
SO means stannous octoate, commercially available as DABCO T-9, produced by the Air Products and Chemicals Inc.
DBTDL means dibutyltin dilaureate, commercially available as DABCO T-12, produced by the Air Products and Chemicals Inc.
UV is 2-(2'-hydroxy-3'5'-di-tert-amylphenyl) benzotriazole, CAS number 25973-55-1, sold by Everlight Chemical Industrial Corp.
"Index" means the ratio of the total moles of reactive isocyanate groups in the reaction mixture, divided by the total moles of isocyanate-reactive groups in the reaction mixture and multiplied by 100.
"pbw" means parts by weight.

In the following detailed descriptions, the properties of the polyurethane foams given in the examples are determined according to the following test methods:
The "Core Densities" are determined in accordance with JIS K6400 method (1997 edition).
"IFD (Indentation Force Deflection) Hardness 25%" is determined according to JIS K6400 method (1997 edition) under a loading of 25 percent compression.
"CLD (Compression Load Deflection) Hardness 25%" is determined according to JIS K6400 method (1997 edition) under a loading of 25 percent compression.
"Change in Hardness" means the proportion (in %) of the increase in the CLD Harness measured at -5°C. against the CLD Hardness measured at 23°C. CLD Hardness 25% is determined according to JIS K6400 method (1997 edition). The tested samples were conditioned at specified temperature for at least 24 hours before test.
"Tensile Strengths" are determined in accordance with JIS K6400 method (1997 edition).
"Elongations" are determined in accordance with JIS K6400 method (1997 edition).
"Tear Strengths" are determined in accordance with JIS K6400 method (1997 edition).
"Ball Resilience" of Core are determined in accordance with JIS K6400 method (1997 edition).
"Dry Comp. Set" means the Dry Heat Compression Set determined in accordance with JIS K6400 method (1997 edition).
"Wet Comp. Set" means the Wet Heat Compression Set determined in accordance with JIS K6400 method (1997 edition).
"UV stability" values are color fastness measurements obtained in accordance with the AATCC 16-1990, option E method. Samples of foam are placed under an UV lamp and exposed to ultra violet light for 20 hours. The results are expressed in a degree from I to 5, while compared with the standard grey scale cards. Grade 5 means no color change at all and grade 1 means almost in dark color. Value of grade 4 and above indicate that no visual change can be identified by naked eyes.
"Moldability" is an evaluation of molding, the foam having good skin and no shrinkage after foaming is rated as "good", one having a shrinkage after foaming but recovered after crushing twice is rated as "crushable", and one having a shrinkage and not recovered after crushing twice is rated as "poor".

The following examples are given to illustrate the present invention and should not be interpreted as any limitation of the scope of this invention in any way. Unless stated otherwise, all parts and percentages are given by weight.

### EXAMPLES

### Examples 1 to 10 and comparative examples C1 to C5

Flexible, low resilience polyurethane foams of Examples 1 to 10, and Comparative Examples C-1 to C-5 were prepared by mixing the components as indicated in Table 2-1 and Table 2-2. All ingredients selected were conditioned in a chamber, having temperature controlled at 23±1°C , for at least 24 hours prior to the foaming. Ingredients, except the organotin compounds and the isocyanates, were pre-mixed together in a 1.5 liter stainless steel beaker using a Cowles type mixer, having rotational speed set at 1,500 rpm, for 40 seconds prior to the addition of the organotin compounds. After the premixing, organotin compounds, if used, were then added into the beaker and mixed again, having rotational speed set at 1,500 rpm, for another 20 seconds. Selected isocyanate compounds were then added into the mixture and mixed with the composition at 3,000 rpm for 5 seconds. The mixture was then poured into a paper lined wooden box of 45cm(W)*45cm(L)*45cm(H) having the top let open, and was subjected to rise. After the foam had reached its final height, it was let sit in the box for another 10 minutes, and then was removed from the box. The prepared foam was then kept in a storage cabinet with air ventilated and temperature controlled at 27±2°C for at least 72 hours.

Foam specimens were cut from the core of the foams prepared using a lab scale motorized band-saw, according to the specimen dimension described in JIS K6400 method (1997 edition). Specimens for tear strength, tensile strength, and elongation were then die-cut, according to the specimen dimension described in JIS K6400 method (1997 edition), from a foam sheet of specified thickness. All the specimens were conditioned in a chamber, having temperature controlled at 23±1°C , and 50% humidity for at least 24 hours prior to physical property measurement.

**TABLE 2-1**

| **Foam Grade 60 kg/m³** | | | | | | | | | | |
|---|---|---|---|---|---|---|---|---|---|---|
| **Example** | **1** | **2** | **3** | **4** | **5** | **6** | **7** | **8** | **9** | **10** |
| **Formulation:** | | | | | | | | | | |
| P1 (pbw) | -- | 48 | 40 | 40 | **--** | 40 | 40 | 40 | 40 | 50 |
| P 2 (pbw) | 30 | -- | -- | -- | 36 | -- | -- | -- | -- | -- |
| P 5 (pbw) | 60 | -- | 58 | -- | 62 | 54 | -- | -- | -- | -- |
| P 6 (pbw) | -- | -- | -- | -- | -- | -- | -- | -- | -- | -- |
| P 7 (pbw) | -- | -- | -- | -- | -- | -- | -- | -- | -- | -- |
| P 8 (pbw) | -- | -- | -- | 58 | -- | -- | 57 | -- | -- | -- |
| P 9 (pbw) | -- | -- | -- | -- | -- | -- | -- | -- | -- | -- |
| P10 (pbw) | -- | 50 | -- | -- | -- | -- | -- | 55 | -- | -- |
| P11 (pbw) | -- | -- | -- | -- | -- | -- | -- | -- | 60 | 50 |
| P12 (pbw) | 6 | -- | -- | -- | -- | 4 | -- | -- | -- | -- |
| P13 (pbw) | -- | 3 | 3 | 3 | 3 | -- | -- | -- | 1.5 | 1.5 |
| Water (pbw) | 0.67 | 0.51 | 0.39 | 0.39 | 0.51 | 0.51 | 0.68 | 0.68 | 0.51 | 0.51 |
| PEG 400 (pbw) | 4 | 2 | 2 | 2 | 2 | 2 | 3 | 5 | -- | -- |
| DEOA (pbw) | 1.3 | 1.1 | 1.5 | 1.5 | 1.35 | 1.5 | 1.2 | 1.2 | -- | -- |
| ISO 1 index | -- | -- | 95 | 105 | -- | -- | -- | -- | -- | -- |
| ISO 2 index | 85 | 90 | -- | -- | 90 | 90 | -- | -- | 95 | 90 |
| ISO 3 index | -- | -- | -- | -- | -- | -- | -- | -- | -- | -- |
| ISO 4 index | -- | -- | -- | -- | -- | -- | 95 | 95 | -- | -- |
| Niax A-230(pbw) | -- | -- | -- | -- | -- | -- | -- | -- | -- | -- |
| SC (pbw) | 0.8 | 1.0 | 1.15 | 1.15 | 1.0 | 1.0 | 0.8 | 0.8 | 1.0 | 1.0 |
| DBTDL (pbw) | 0.48 | 0.36 | 0.36 | 0.31 | 0.31 | 0.45 | 0.54 | 0.57 | 0.32 | 0.36 |
| SO (pbw) | -- | -- | -- | -- | -- | -- | -- | -- | -- | -- |
| DC 5950 (pbw) | 0.7 | 0.85 | 0.85 | 0.85 | 0.85 | 0.85 | 0.7 | 0.85 | 0.8 | 0.8 |
| | | | | | | | | | | |
| **Foam Properties:** | | | | | | | | | | |
| Visual | OK | OK | OK | OK | OK | OK | OK | OK | OK | OK |
| | | | | | | | | | | |
| Core Density (kg/m³) | 68.2 | 61.3 | 62.9 | 64.9 | 59.7 | 60.6 | 67.1 | 69.2 | 56.3 | 59.8 |
| IFD 25% (N/3 l4 cm²) | 87 | 58 | 31 | 42 | 48 | 67 | 32 | 29 | 33 | 31 |
| CLD 25%Hardness(N/cm²) | | 0.257 0.156 | 0.097 | 0.113 | 0.139 | 0.198 | n.a. | n.a. | n.a. | n.a. |
| Change in Hardness (%) | 22.3 | 7.2 | 4.6 | 5.8 | 18.7 | 5.3 | n.a. | n.a. | n.a. | n.a. |
| Tensile Strength (kPa) | 86 | 166 | 173 | 186 | 127 | 134 | 213 | 197 | 171 | 162 |
| Elongation (%) | 164 | 227 | 292 | 274 | 248 | 238 | 315 | 302 | 216 | 237 |
| Tear Strength (N/m) | 131 | 152 | 173 | 191 | 176 | 161 | 196 | 181 | 177 | 182 |
| Ball Resilience of Core (%) | 4 | 4 | 6 | 5 | 3 | 3 | 8 | 10 | 4 | 2 |
| Dry Comp. Set (%) | 9.2 | 4.4 | 3.1 | 3.1 | 4.1 | 3.4 | 4.7 | 5.2 | 7.3 | 8.6 |
| Wet Comp. Set (%) | 8.8 | 4.6 | 3.4 | 2.6 | 5 | 4.5 | n.a. | n.a. | n.a. | n.a. |

**TABLE 2-2**

| **Foam Grade 60 kg/m³** | | | | | |
|---|---|---|---|---|---|
| **Example** | **C1** | **C2** | **C3** | **C4** | **C5** |
| **Formulation:** | | | | | |
| P1 (pbw) | 55 | 50 | 50 | 31 | 50 |
| P 2 (pbw) | -- | -- | -- | 10 | -- |
| P 5 (pbw) | -- | -- | -- | -- | -- |
| P 6 (pbw) | -- | -- | 50 | -- | -- |
| P 7 (pbw) | -- | 50 | -- | 55 | 50 |
| P 8 (pbw) | -- | -- | -- | -- | -- |
| P 9 (pbw) | 45 | -- | -- | -- | -- |
| P 10 (pbw) | -- | -- | -- | -- | -- |
| P 12 (pbw) | -- | -- | -- | -- | -- |
| P 13 (pbw) | -- | -- | -- | -- | 3 |
| Water (pbw) | 1.3 | 1.3 | 0.39 | 0.39 | 1.3 |
| PEG 400 (pbw) | -- | -- | 4 | 4 | -- |
| DEOA (pbw) | -- | -- | 1.2 | 1.2 | -- |
| ISO 1 index | 90 | -- | -- | 90 | -- |
| ISO 2 index | -- | 90 | 95 | -- | -- |
| ISO 3 index | -- | -- | -- | -- | 90 |
| ISO 4 index | -- | -- | -- | -- | -- |
| Niax A-230(pbw) | 0.6 | 0.6 | -- | -- | 0.6 |
| SC (pbw) | -- | -- | 1.15 | 1.15 | -- |
| DBTDL (pbw) | 0.35 | -- | 0.45 | 0.45 | -- |
| SO (pbw) | -- | 0.35 | -- | -- | 0.4 |
| DC 5950 (pbw) | 0.25 | 0.25 | 1.2 | 1.2 | 0.25 |
| | | | | | |

| **Foam Properties:** | | | | | |
|---|---|---|---|---|---|
| Visual | Collapse | cotton candy like foam | cotton candy like foam | Collapse | OK |
| Core Density(kg/m³) | -- | -- | -- | -- | 60.5 |
| IFD 25% (N/314 cm²) | -- | -- | -- | -- | 54 |
| CLD 25%Hardness(N/cm²) | -- | -- | -- | -- | 0.152 |
| Change in Hardness (%) | -- | -- | -- | -- | 6.1 |
| Tensile Strength (kPa) | -- | -- | -- | -- | 107 |
| Elongation (%) | -- | -- | -- | -- | 241 |
| Tear Strength(N/m) | -- | -- | -- | -- | 124 |
| Ball Resilience of Core(%) | -- | -- | -- | -- | 5 |
| Dry Comp. Set (%) | -- | -- | -- | -- | 3.2 |
| Wet Comp. Set (%) | -- | -- | -- | -- | 3.1 |

Examples 1 to 10 illustrate the processability, foam mechanical properties, and formulating flexibility, compared to common standard foam formulation (Comparative Example C5) in the preparation of flexible, low resilience polyurethane foams. Traditional high unsaturation polyol and DMC low unsaturation polyol are both used in Comparative Example C-5. Comparative examples C1 to C4 only produced foams which either collapsed or became a "cotton-candy like" foam mass, having no strength and could not be used in further foam physical property measurements. Example 1-10 illustrate the invented isocyanate-reactive composition (b) can provide sufficient reactivity to react with aliphatic or alicyclic isocyanates in the polyaddition polymerization in the preparation of flexible, low resilience polyurethane foam.

### Example 11 to 18

Similar procedure as which used in the preparation of Example 1 to 10 was used to prepare Example 11 to 18, except that the selected polyol P3 and P4 was firstly melt in an oven, having temperature of 60±1 °C. When the polyols were entirely melt, the polyol were then moved to a conditioning chamber of 28± 1°C for 6 hours before further foaming. All other ingredients selected were conditioned in another chamber, having temperature controlled at 23±1°C , for at least 24 hours prior to the foaming.

Selected polyol P3 or P4 were firstly mixed into the other polyol using a Cowles type high shear mixer at 3,000 rpm for 60 seconds. Flexible, low resilience polyurethane foams of Examples 11 to 18 were prepared by mixing the components as indicated in Table 3. Ingredients, except the organotin compounds and the isocyanates, were pre-mixed together in a 1.5 liter stainless steel beaker using a Cowles type mixer, having rotational speed set at 2,000 rpm, for 40 seconds prior to the addition of the organotin compounds. After the premixing, organotin compounds, if used, were then added into the beaker and mixed again, having rotational speed set at 2,000 rpm, for another 20 seconds. Selected isocyanate compounds were then added into the mixture and mixed with the composition at 3,000 rpm for 5 seconds. The mixture was then poured into a paper lined wooden box of 45cm(W)* 45cm (L)* 45cm (H), having the top let open, and was subjected to rise. After the foam had reached its final height, it was let sit in the box for another 10 minutes, and then was removed from the box. The prepared foam was kept in a storage cabinet with air ventilated and temperature controlled at 27±2°C for at least 72 hours.

Foam specimens were cut from the core of the foams prepared using a lab scale motorized band-saw, according to the specimen dimension described in J1S K6400 method (1997 edition). Specimens for tear strength, tensile strength, and elongation were then die-cut, according to the specimen dimension described in JIS K6400 method (1997 edition), from a foam sheet of specified thickness. All the specimens were conditioned in a chamber, having temperature controlled at 23±1°C, and humidity of 50% for at least 24 hours before further physical property measurement.

**TABLE 3**

| **Foam Grade 60 kg/m³** | | | | | | | | |
|---|---|---|---|---|---|---|---|---|
| **Example** | **11** | **12** | **13** | **14** | **15** | **16** | **17** | **18** |
| **Formulation:** | | | | | | | | |
| P 1 (pbw) | 31 | 31 | 36 | 36 | 21 | 21 | 15 | 17 |
| P 2 (pbw) | -- | -- | -- | -- | 10 | 10 | -- | -- |
| P 3 (pbw) | -- | 65 | -- | 60 | -- | -- | 79 | 79 |
| P 4 (pbw) | 65 | -- | 60 | -- | 65 | 65 | -- | -- |
| P 13 (pbw) | -- | -- | -- | -- | -- | 2.5 | 2 | 2 |
| Water (pbw) | 0.71 | 0.71 | 0.67 | 0.69 | 0.55 | 0.55 | 0.71 | 0.71 |
| Glycerin (pbw) | 5 | 5 | 5 | 5 | 5 | 5 | 6 | 4 |
| DEOA(pbw) | 2.4 | 2.4 | 2 | 2.1 | 1.8 | 1.8 | 1 | 1 |
| ISO 1 index | 85 | 85 | 90 | 90 | -- | -- | -- | -- |
| ISO 2 index | -- | -- | -- | -- | 85 | 85 | -- | -- |
| ISO 6 index | -- | -- | -- | -- | -- | -- | 85 | 85 |
| SC (pbw) | 0.8 | 0.8 | 0.85 | 0.85 | 1.0 | 1.0 | 0.8 | 0.8 |
| DBTDL (pbw) | 0.36 | 0.36 | 0.3 | 0.33 | 0.36 | 0.36 | 0.54 | 0.51 |
| DC 5950 (pbw) | 1 | 1.05 | 1 | 1.05 | 0.25 | 0.25 | 0.8 | 0.8 |
| | | | | | | | | |
| **Foam Properties:** | | | | | | | | |
| Visual | OK | OK | OK | OK | shrink | OK | OK | OK |
| Core Density(kg/m³) | 62.3 | 57.8 | 60.3 | 59.8 | 68.9^{(*)} | 61.5 | 59.2 | 57.3 |
| IFD 25%(N/314cm²) | 67 | 81 | 72 | 69 | 43^{(*)} | 71 | 92 | 86 |
| CLD | | | | | | | | |
| 25%Hardness(N/cm²) | 0.204 | 0.261 | 0.204 | 0.208 | 0.115^{(*)} | 0.196 | n.a. | n.a. |
| Change in Hardness (%) | 6.2 | 6.7 | 7.1 | 9.6 | 13.1^{(*)} | 13.8 | n.a. | n.a. |
| Tensile Strength (kPa) | 268 | 294 | 245 | 233 | 315^{(*)} | 298 | 286 | 273 |
| Elongation (%) | 309 | 331 | 287 | 292 | 280^{(*)} | 264 | 265 | 282 |
| Tear Strength(N/m) | 296 | 317 | 337 | 351 | 362^{(*)} | 341 | 389 | 372 |
| Ball Resilience of | | | | | | | | |
| Core(%) | 7 | 12 | 8 | 10 | 4^{(*)} | 6 | 11 | 9 |
| Dry Comp. Set (%) | 3.1 | 2.4 | 3 | 3.1 | 8.9^{(*)} | 6.8 | 14.6 | 16.3 |
| Wet Comp. Set (%) | 2.9 | 4.7 | 3.1 | 2.9 | 10.1^{(*)} | 7.8 | n.a. | n.a. |

| | | | | | | | | |
|---|---|---|---|---|---|---|---|---|
| (*) : Result from a crushed-to-open foam specimen. | | | | | | | | |

A close cell foam was obtained in Example 15, and the foam started to shrink while the inner temperature started to drop. The foam was crushed by passing the foam through a pair of motorized stainless steel roller crusher twice, to prevent it from further shrink. The crushed foam was conditioned in a chamber, having temperature controlled at 23±1°C and humidity at 50%, for at least 72 hours before further physical property measurement. The physical properties illustrated in Example 15 were measured from specimen cut from the core of the crushed foam.

### Example 19 to 27

Flexible, low resilience polyurethane foams of Examples 19 to 27 were prepared by mixing the components as indicated in Table 4 .Same procedure as described in the preparation of Example 1 to 18 was used to produce Example 19 to 27. UV additive was added into the isocyanate-reactive mixture in the premixing procedure.

The foam physical property measurements of Examples 19 to 27 follow the same procedures as illustrated in Example 1 to 18, except for the UV stability measurement. In the UV stability measurement, samples of 5cm(width)*10cm(length)*0.5cm(thickness) were placed in a oven with inner temperature set at 80±1°C, having an OSRAM ULTRA-VITALUX 300 watts UV light bulb installed 30 cm right above the foam specimens. The specimens were exposed to ultra violet light for 20 hours. The results are expressed in a degree from 1 to 5, while compared with the standard grey scale cards. Grade 5 means no color change at all and grade 1 means almost in dark color. Result of grade 4 and above indicate no visual change can be identified by naked eyes.

**TABLE 4**

| **Foam Grade 30 kg/m³** | | | | | | | | | |
|---|---|---|---|---|---|---|---|---|---|
| **Example** | **19** | **20** | **21** | **22** | **23** | **24** | **25** | **26** | **27** |
| **Formulation:** | | | | | | | | | |
| P 1 (pbw) | 20 | 20 | 20 | 20 | 40 | 30 | 60 | 60 | 50 |
| P 3 (pbw) | 77 | -- | 76 | 76 | 15 | 15 | -- | -- | -- |
| P 4 (pbw) | -- | 77 | -- | -- | -- | -- | -- | -- | -- |
| P 11 (pbw) | -- | -- | -- | -- | 45 | 55 | 40 | 40 | 50 |
| P 13 (pbw) | 1.5 | 1.2 | -- | -- | 2 | 2 | 2 | 2 | 2 |
| Water(pbw) | -- | -- | 0.44 | 0.44 | 3.45 | 3.45 | 3.45 | 3.45 | 3.45 |
| Glycerin(pbw) | 3 | 3 | 4 | 4 | -- | -- | -- | -- | -- |
| DEOA(pbw) | 1.6 | 1.8 | 1.2 | 1.2 | 1 | 1 | 1 | 1 | 1 |
| ISO 1 index | 85 | 90 | 90 | 95 | -- | -- | 80 | 90 | 80 |
| ISO 5 index | -- | -- | -- | -- | 85 | 85 | -- | -- | -- |
| SC (pbw) | -- | -- | -- | -- | 0.8 | 0.8 | 0.8 | 0.8 | 0.8 |
| SBC (pbw) | 3.75 | 3.75 | 3.75 | 3.75 | -- | -- | -- | -- | -- |
| DBTDL (pbw) | 0.45 | 0.45 | 0.4 | 0.4 | 0.28 | 0.28 | 0.42 | 0.42 | 0.45 |
| DC 5950 (pbw) | 0.9 | 0.9 | 0.9 | 0.9 | 0.8 | 0.8 | 0.8 | 0.8 | 0.8 |
| UV | 2 | 2 | 2 | 2 | 3 | 3 | 3 | 3 | 3 |
| | | | | | | | | | |

| **Foam Properties:** | | | | | | | | | |
|---|---|---|---|---|---|---|---|---|---|
| Visual | OK | OK | OK | OK | OK | OK | OK | OK | OK |
| Core Density(kg/m³) | 28.6 | 31.4 | 26.3 | 24.1 | 30.0 | 29.3 | 28.7 | 30.6 | 29.4 |
| IFD 25% (N/314 | | | | | | | | | |
| cm²) | 37 | 41 | 43 | 56 | 43 | 38 | 30 | 55 | 26 |
| CLD | | | | | | | | | |
| 25%Hardness(N/cm²) | 0.106 | 0.110 | 0.117 | 0.149 | n.a. | n.a. | 0.105 | 0.149 | 0.074 |
| Change in Hardness | | | | | | | | | |
| (%) | 7.2 | 8.1 | 11.6 | 9.8 | n.a. | n.a. | 19.5 | 34.8 | 10.9 |
| Tensile Strength | | | | | | | | | |
| (kPa) | 196 | 235 | 210 | 217 | 152 | 148 | 164 | 143 | 172 |
| Elongation (%) | 287 | 296 | 292 | 258 | 132 | 144 | 142 | 117 | 153 |
| Tear Strength(N/m) | 224 | 244 | 267 | 278 | 160 | 143 | 153 | 128 | 164 |
| Ball Resilience of Core(%) | 6 | 8 | 9 | 11 | 8 | 7 | 4 | 13 | 4 |
| Dry Comp. Set (%) | 8.4 | 5.6 | 7.4 | 4.3 | 14.1 | 16.1 | 9.5 | 22.6 | 6.4 |
| Wet Comp. Set (%) | 8.7 | 4.7 | 5.6 | 5.7 | n.a. | n.a. | 14.9 | 28.7 | 12.6 |
| UV Stability | 5 | 5 | 5 | 5 | 4 | 4 | 4 | 4 | 4 |

Foams prepared in Examples 19 to 27 illustrate that the disclosed isocyanate-reactive mixture can be used in the preparation of non-yellowing polyurethane low resilience foam with density as low as 24 kg/M³ ( about 1.5 pcf). These low density, non-yellowing polyurethane low resilience foams are particularly useful in apparel applications, e.g. brassiere pads and shoulder pads.

### Example 28 to 30

Flexible, low resilience polyurethane foams of Examples 28 to 30 were prepared by mixing the components as indicated in Table 5. All ingredients selected were conditioned in a chamber, having temperature controlled at 23±1°C for at least 24 hours prior to the foaming. Ingredients, except the organotin compounds and the isocyanates, were pre-mixed together in a 1.5 liter stainless steel beaker using a Cowles type mixer, having rotational speed set at 1,500 rpm, for 40 seconds prior to the addition of the organotin compounds. After the premixing, organotin compounds, if used, were then added into the beaker and mixed again, having rotational speed set at 1,500 rpm, for another 20 seconds. Selected isocyanate compounds were then added into the mixture and mixed with the composition at 3,000 rpm for 5 seconds. The mixture was immediately poured into an aluminum mold of 40cm(W)*40cm(L)* 10cm(H) having mold temperature preheated to 60°C in advance, having a lid with 4 top holes, and the mold is maintained at 60°C and covered with the lid. After maintaining the mold temperature at 60°C for 10 minutes, the molded flexible, low resilience polyurethane foam was then take out from the mold. The prepared foam was then kept in a storage cabinet with air ventilated and temperature controlled at 27±2°C for at least 72 hours prior to any further tests.

**TABLE 5**

| **Example** | **28** | **29** | **30** |
|---|---|---|---|
| **Formulation:** | | | |
| P 1 (pbw) | 20 | 25 | 25 |
| P 5 (pbw) | -- | 56 | 35 |
| P 8 (pbw) | 76 | -- | 36 |
| P 11 (pbw) | -- | 15 | -- |
| P 12 (pbw) | 2 | 2 | 3.5 |
| Water (pbw) | 0.6 | 0.54 | 0.54 |
| PEG 400(pbw) | 4 | 4 | 4 |
| DEOA(pbw) | 1.68 | 1.46 | 1.55 |
| ISO 1 index | -- | 95 | 90 |
| ISO 2 index | 95 | -- | -- |
| SC (pbw) | 0.8 | 0.9 | 0.9 |
| DBTDL (pbw) | 0.55 | 0.6 | 0.55 |
| DC 5179 (pbw) | 0.9 | 0.9 | 0.84 |

| **Foam Properties:** | | | |
|---|---|---|---|
| Moldability | Crushable | Good | Good |
| Core Density(kg/m³) | 72.6 | 68.7 | 74.7 |

### Industrial Applicability

The polyurethane foam of the present invention has low resilience, and is suitable to be used as filling material for brassiere pads, shoulder pads, and also suitable to be used for bedding, pillows, furniture cushions, and automobiles seat cushions. It is particularly suitable for bedding and pillows.

## Claims

1. A low resilience foam comprising a reaction product of:
a. an isocyanate component substantially free of aromatic isocyanates which contain isocyanate group attached directly to aromatic ring;
b. an isocyanate-reactive mixture comprising
(b1) a first isocyanate-reactive component having at least 2.6 isocyanate-reactive groups, preferably 2.6-6.5 isocyanate-reactive groups, more preferably 2.65-6.0 isocyanate-reactive groups, most preferably 2.7-5.5 isocyanate-reactive groups, hydroxyl equivalent weight of less than 800, preferably 80-800, more preferably 100-700, most preferably 110-600, a hydroxyl number greater than 70 mg KOH/g, preferably 70-700 mg KOH/g, more preferably 80-560 mg KOH/g, most preferably 90-510 mg KOH/g,
(b2) a second isocyanate-reactive component having average hydroxyl functionality of less than 6.0, preferably 1.8-6.0, more preferably 1.85-4.5, hydroxyl equivalent weight of from 600 to 6,000, preferably 700-5,000, more preferably 800-4,500, hydroxyl number of 9-94 mg KOH/g, preferably 19-80 mg KOH/g, more preferably 14-70 mg KOH/g, primary hydroxyl groups content of at least 30 parts by weight, preferably at least 40 parts by weight, more preferably at least 51 parts by weight, based on 100 parts by weight of total weight of the hydroxyl groups of said second isocyanate-reactive component,
wherein said first isocyanate-reactive component is used in an amount of from 20-90 parts by weight, preferably 20-70 parts by weight, and said second isocyanate-reactive component is used in an amount of 10-80 parts by weight, preferably 30-80 parts by weight, both based on 100 parts by weight of said isocyanate-reactive mixture;
c. catalyst; and
d. optionally, one or more components selected from the group consisting of water, surfactant, cross-linker, and additives; and
wherein the foam is produced at an isocyanate index of from about 65-110, preferably about 70-105 and more preferably about 75-105.

2. The foam according to claim 1, wherein said isocyanate component is one or more isocyanates selected from the group consisting of aliphatic isocyanates, alicyclic isocyanates and aromatic isocyantes which contain no isocyanate group linked directly to aromatic ring.

3. The foam according to claim 1 or 2, wherein said aliphatic isocyanates comprise an aliphatic polyisocyanate monomer, or a blend of aliphatic polyisocyanate monomer and trimer which is a product of trimerization reaction of aliphatic polyisocyanates or alicyclic polyisocyanates or aromatic polyisocyantes which contain no isocyanate group linked directly to aromatic ring, wherein the blend has a NCO content of from 20.5 to 50.0 parts by weight based on 100 parts by weight of total isocyanate groups in the isocyanate component and an average calculated functionality of from 2 to 3, wherein preferably the aliphatic polyisocyanate monomer is hexamethylene diisocyanate, and the trimer is a product of trimerization reaction of hexamethylene diisocyanate.

4. The foam according to any of claims 1-3, wherein said alicyclic isocyanates comprise an alicyclic polyisocyanate monomer, or a blend of alicyclic polyisocyanate monomer and trimer which is a product of trimerization reaction of aliphatic polyisocyanates or alicyclic polyisocyanates or aromatic polyisocyantes which contain no isocyanate group linked directly to aromatic ring, wherein the blend has a NCO content of from 20.5 to 38.0 parts by weight based on 100 parts by weight of total isocyanate groups in the isocyanate component and an average calculated functionality of from 2 to 3, wherein preferably the alicyclic polyisocyanate monomer is isophorone diisocyanate, and the trimer is a product of trimerization reaction of hexamethylene diisocyanate.

5. The foam according to any of claims 1-4, wherein said aromatic isocyantes which contain no isocyanate group linked directly to aromatic ring comprise aromatic polyisocyante monomer which contains no isocyanate group linked directly to aromatic ring, or a blend of aromatic polyisocyante monomer which contains no isocyanate group linked directly to aromatic ring and trimer which is a product of trimerization reaction of aliphatic polyisocyanates or alicyclic polyisocyanates or aromatic polyisocyantes which contain no isocyanate group linked directly to aromatic ring, wherein the blend has a NCO content of from 20.5 to 44.0 parts by weight based on 100 parts by weight of total isocyanate groups in the isocyanate component and an average calculated functionality of from 2 to 3, wherein preferably the aromatic polyisocyante monomer which contains no isocyanate group linked directly to aromatic ring is xylylene diisocyanate or tetramethylxylylene diisocyanate, and the trimer is a product of trimerization reaction of hexamethylene diisocyanate.

6. The foam according to any of claims 1-5, wherein said aliphatic isocyanates comprise at least one selected from the group consisted of : hexamethylene diisocyanate, hexamethylene triisocyanate, undecane triisocyanate, undecane diisocyanate, their dimmers and their trimers.

7. The foam according to any of claims 1-6, wherein said alicyclic isocyanates comprise at least one selected from the group consisted of: bicycloheptane triisocyanate, isophorone diisocyanate, dicyclohexylmethane diisocyanate, methylcyclohexane diisocyanate, dimethylcyclohexane diisocyanate, their dimmers and their trimers.

8. The foam according to any of claims 1-7, wherein the aromatic isocyante which contains no isocyanate group linked directly to aromatic ring is at least one selected from the group consisting of xylylene diisocyanate, tetramethylxylylene diisocyanate, their dimmers and their trimers.

9. The foam according to any of claims 1-8, wherein said first isocyanate-reactive component (b1) is a polyoxypropylene, having at least three isocyanate-reactive groups, having an unsaturation level of less than 0.05 meq/g, preferably produced from Double Metal Cyanide (DMC) complexes catalyzed ring opening addition polymerization of propylene oxide, having an unsaturation level of less than about 0.020 meq/g.

10. The foam according to any of claims 1-9, wherein said second isocyanate-reactive component (b2) is poly(tetramethylene-ether) glycol, having a weight-average molecular weight of from 1200 to 2,400 g/mol, and all the hydroxyl functional groups in said second isocyanate-reactive component (b2) are primary hydroxyl group.

11. The foam according to any of claims 1-10, wherein said second isocyanate-reactive component (b2) is poly(trimethylene-ether) glycol, having a weight-average molecular weight of from 1200 to 3,000 g/mol, and all the hydroxyl functional groups in said second isocyanate-reactive component (b2) are primary hydroxyl group.

12. The foam according to any of claims 1-11, wherein said second isocyanate-reactive component (b2) is a polyoxyethylene-polyoxypropylene copolymer, and comprising at least 7.5 parts by weight of oxyethylene based on 100 parts by weight of said second isocyanate-reactive component.

13. The foam according to claim 12, wherein said second isocyanate-reactive component (b2) is a polyoxyethylene-polyoxypropylene copolymer, made by the polyaddition of propylene oxide to initiator having 2 hydroxy groups, then capped with ethylene oxide, having unsaturation level less than 0.05 meq/g, and primary hydroxyl group content above 51 weight % based on weight of total hydroxyl groups in said second isocyanate-reactive component (b2).

14. The foam according to any of claims 1-13, wherein said cross-linker has a weight average molecular weight of 60-420 g/mol, and at least 2 isocyanate-reactive functional groups; it is used in an amount of 0.2-15 parts by weight, preferably 1.2-12 parts by weight, based on 100 parts by weight of said isocyanate-reactive mixture.

15. The foam according to any of claims 1-14, wherein said isocyanate-reactive component further comprises from 0 to 40 parts by weight, based on 100 parts by weight of isocyanate-reactive component, of polymer polyol having a solid content from 5 to 55 parts by weight based on 100 parts by weight of polymer polyol, and a having hydroxyl number of from 15 to 50 mgKOH/g.

16. The foam according to any of claims 1-15, wherein said isocyanate-reactive component further comprises 0-5.0, preferably 0 to 3.5 parts by weight, based on 100 parts by weight of total foam mass, of a polyoxypropylene (b3) having an nominal hydroxyl functionality of 1, and a weight-average molecular weight of from 800 to 8,500 g/mol, as cell opener.

17. The foam according to any of claims 1-16, wherein said catalyst (c) is a mixture comprising a salt of Br⌀nsted acid with alkali metals or alkaline earth metals, and an organometallic catalyst.

18. The foam according to claim 17, wherein said salt of Br⌀nsted acid with alkali metals or alkaline earth metals is sodium dicarbonate or sodium carbonate.

19. The foam according to any of claims I to 18, wherein said cross-linker (c) is a compound of Formula 1
H₍₃₋ₓ₎-N-[(CH₂)₂-OH]ₓ (Formula 1)
where x is an integer of I to 3.

20. The foam according to claim 19, wherein said cross-linker (c) is diethanolamine.

21. A process for preparation of the foam according to any of claims 1 to 20, comprising reacting component a to component d as defined in any of claims I to 20 at an isocyanate index of from about 65-110, preferably about 70-105 and more preferably about 75-105.
